# EUROPÄISCHE PATENTANMELDUNG

(11) **EP 3 100 978 A1**
(43) Veröffentlichungstag der Anmeldung: **07.12.2016**
(21) Anmeldenummer: 15170226.3
(22) Anmeldetag: 02.06.2015
(51) Int. Cl.: C01B 33/107, C07F 7/12, C22B 7/00

(54) **AUFBEREITUNG FEINTEILIGER FESTSTOFFE BEI DER HERSTELLUNG VON CHLORSILANEN DURCH AGGLOMERIEREN UND KOMPAKTIERUNG**

(71) Anmelder: Evonik Degussa GmbH, 45128 Essen (DE)
(72) Erfinder: MÜH, Dr. Ekkehard, 79618 Rheinfelden (DE); MARINAS PÉREZ, Dr. Janaina, 79730 Murg (DE); RAULEDER, Dr. Hartwig, 79618 Rheinfelden (DE); KROPFGANS, Dr. Frank, 79618 Rheinfelden (DE)

(57) **Zusammenfassung**

Gegenstand der Erfindung ist ein Verfahren zur Aufbereitung feinteiliger Feststoffe bei der Herstellung von Chlorsilanen, das dadurch gekennzeichnet ist, dass die feinteiligen Feststoffe zu Körpern erhöhter Dichte hydraulisch gepresst werden, wobei die feinteiligen Feststoffe durch Entzug von Wärmeenergie vereist oder durch Zufuhr von Wärmeenergie agglomeriert werden.

## Beschreibung

Die Erfindung betrifft ein Verfahren zur Aufbereitung feinteiliger Feststoffe, die bei der Herstellung von Chlorsilanen anfallen, durch hydraulisches Pressen, sowie den verfahrensgemäß erhaltenen Pressling.

Chlorsilane wie Siliziumtetrachlorid (SiCl₄, abgekürzt *STC),* Trichlorsilan (HSiCl₃, abgekürzt *TCS*) und Dichlorsilan (H₂SiCl₂) stellen eine wichtige Stoffklasse mit einem breiten Anwendungsgebiet dar. So werden sie eingesetzt als Rohstoff zur Herstellung von SiO₂, dem sogenannten *fumed silica,* als Ausgangsmaterial für Organosilane und Kieselsäureester sowie als Edukte für Lichtwellenleiter und Halbleiter- bzw. Solar-Silizium.

Es ist daher von höchster technischer und wirtschaftlicher Bedeutung, Chlorsilane in großer Menge kostengünstig und sicher herstellen zu können.

Silizium (Si) und Chlorwasserstoff (HCl) und/oder Chlor (Cl) werden in einem Reaktor, z. B. Wirbelschichtreaktor oder Festbettreaktor oder Rührbettreaktor umgesetzt, wodurch sich anorganische Chlorsilane wie SiCl₄ und/oder HSiCl₃ und/oder H₂SiCl₂ oder Gemische daraus bilden und als Produktgase den Reaktor verlassen und anschließend weiter behandelt werden.

Die Produktgase enthalten produktionsbedingt Feststoffe wie zum Beispiel Pulver und/oder Staub enthaltend Silizium, Eisen, Eisenchlorid und/oder Aluminiumchlorid. Beispielsweise sind Eisenchlorid und Aluminiumchlorid Reaktionsnebenprodukte, die davon herrühren, dass das eingesetzte Roh-Silizium diese Metalle in geringen Mengen als Kontaminationen enthält, die nach der Verflüssigung der Produktgase, der sogenannten Brüden, in der Flüssigphase zurückbleiben und sich im Behälter für die Flüssigphase absetzen. Dadurch können sie aus dem gebildeten Chlorsilangemisch abgetrennt werden.

Auch in einem Reaktor für die Chlorsilanherstellung bleiben oben genannte Feststoffe zurück. Besonders beim Wirbelschichtverfahren zur Herstellung von Trichlorsilan und Siliziumtetrachlorid treten diese Feststoffe in Form von Pulver, Staub, zum Beispiel Filterstaub, und/oder Asche, zum Beispiel Heißgasfilterasche auf. Solche Feststoffe werden im Rahmen der Erfindung unter den Begriff "feinteilige Feststoffe" zusammengefasst.

Die feinteiligen Feststoffe weisen hauptsächlich Silizium und Eisen auf, und sie können außerdem Chlorverbindungen enthalten. Zusammen mit den Chlorverbindungen, die unter den Reaktionsbedingungen gasförmige Reaktionsprodukte sind, zum Beispiel TCS und STC, werden die feinteiligen Feststoffe aus dem Reaktor getragen.

Beim Wirbelschichtverfahren wird gemahlenes metallurgisches Silizium mit einem Durchmesser von etwa 500 µm mit Chlorwasserstoff umgesetzt. Während des Ablaufs der Reaktion werden die Siliziumteilchen immer kleiner und können den Reaktor schließlich als Stäube verlassen. Diese Stäube werden üblicherweise mittels Filtern oder Zyklonen abgetrennt, bevor die Reaktionsprodukte TCS und STC kondensiert werden. Da sie sehr fein sind und neben Eisen noch einen großen Siliziumanteil enthalten, sind sie ein wertvoller Rohstoff.

Weitere Silizium haltige Feststoffe fallen bei der Herstellung von Silizium aus Monosilan durch Abscheideprozesse an. Solche Feststoffe sind häufig Gemische aus Produktgrobanteilen, die über Siebe aus dem Prozess abgetrennt werden, sind ebenfalls Analysenrückstände und nicht spezifikationsgerechte Ware. Der Siliziumanteil beträgt oft mehr als 99 %.

Die Patentschrift DE 10 2009 037 155 B3 sieht vor, die aus der Wirbelschicht ausgetragenen Stäube in einem zweiten angeschlossen Wirbelschichtreaktor umzusetzen. Dieses Verfahren hat den Nachteil, dass der Großteil des Feststoffes auf Grund seiner extremen Feinteiligkeit auch aus dem zweiten Reaktor ausgetragen wird, ohne stofflich umgesetzt zu werden.

DE 10 2009 020 143 A1 offenbart ein Verfahren zur Aufarbeitung von Sägeabfällen aus der Waferherstellung. In diesem Fall werden Silizium und organische Verbindungen enthaltende Sägeabfälle auf einem Granulierteller granuliert und sollen so für den weiteren Einsatz in der Chlorsilanherstellung vorbereitet werden. Die Sägeslurries, aus denen diese Si haltigen Sägespäne oder Stäube abgetrennt werden, fallen als Filterkuchen oder Suspensionen dieser Abfälle in Silikonölen oder Polyethylenglykolen an. Doch ist die Separation der einzelnen Komponenten aufwändig, und der hohe Anteil organischer Verbindungen neben Silizium in diesem Strom führt in den Chlorsilanreaktoren zur Bildung zahlreicher unerwünschter Nebenprodukte. Zudem sind die aus dem kristallinen Material hergestellten Granulate mechanisch nur wenig stabil und zerfallen schnell wieder.

Eine weitere Möglichkeit, die oben genannten Feststoffe wieder zu größeren Aggregaten bzw. Stücken zu verbinden, besteht darin, diese zu schmelzen oder zu sintern. Dabei ist allerdings der aufgrund der hohen Schmelztemperaturen notwendige Energieaufwand nachteilig.

Es bestand daher die Aufgabe, die feinteiligen Feststoffe dergestalt zu verändern, dass sie wieder dem Chlorsilanherstellprozess zugeführt werden können.

Die Aufgabe wird gelöst durch ein Verfahren zur Aufbereitung der feinteiligen Feststoffe und durch die gemäß diesem Verfahren erhaltenen Presslinge.

Gegenstand der Erfindung ist ein Verfahren zur Aufbereitung feinteiliger Feststoffe bei der Herstellung von Chlorsilanen, welches dadurch gekennzeichnet ist, dass die feinteiligen Feststoffe zu Körpern erhöhter Dichte hydraulisch gepresst werden, wobei die feinteiligen Feststoffe durch Entzug von Wärmeenergie vereist oder durch Zufuhr von Wärmeenergie agglomeriert werden.

Die Vorgehensweise, die feinteiligen Feststoffe hydraulisch zu pressen, ist im Rahmen der Erfindung gleichbedeutend damit, dass die feinteiligen Feststoffe in einer hydraulischen Presse gepresst werden. Vorrichtungen, die nach dem Prinzip des hydraulischen Pressens funktionieren, sind dem Fachmann bekannt.

Mit dem Vereisen, das durchgeführt werden kann, während hydraulisch gepresst wird, wird ein Restfeuchtegehalt ausgenutzt. Die Restfeuchte vereist oder kondensiert und bindet die feinen Partikel in dem Volumen der feinteiligen Feststoffe zu makroskopischen Körpern. Die alternative Zufuhr von Wärmeenergie, die durchgeführt werden kann, während hydraulisch gepresst wird, führt unter den feinen Partikeln zur Ausbildung von Sinterhälsen oder versinterten Partikeln. Diese beiden Erscheinungen sind dem Fachmann auf dem Gebiet des Sinterns bekannt. Sinterhälse entstehen zwischen benachbarten feinen Partikeln durch das Anschmelzen der Partikel, wobei diese in Kontakt miteinander geraten, und dem Wiedererstarren zu neuen, größeren Partikeln. Je kleiner die feinen Partikel sind, auf eine desto geringere Temperatur kann der feinteilige Feststoff gebracht werden, um das Anschmelzen der feinen Partikel zu bewirken und nach dem Abkühlen des Presslings Partikel mit Sinterhalsen zu erhalten. Die vor dem Anschmelzen vorhandenen feinen Partikel haben nach dem Wiedererstarren ihren individuellen Charakter eingebüßt. So erhält man in dem Verfahren Feststoffe mit gröberen Teilen.

Der Vorteil des beanspruchten Verfahrens ist vor allem darin zu sehen, dass man nach der Durchführung Presslinge erhält, die auf einfachere Art und Weise in den Herstellprozess von Chlorsilanen zurück geführt werden können, ohne wie sonst üblich, das extrem staubende Pulver handhaben zu müssen. Zum Beispiel können die erfindungsgemäß erhaltenen Presslinge mittels Transportbänder oder Container gehandhabt und in den Chlorsilanherstellprozess zurückgeführt werden. Ein Luftabschluss, der eine gefährliche Verwirbelung feinteiliger Feststoffe unterbindet, oder eine aufwendige Absaugung mit Filtervorrichtungen ist mit der Durchführung des erfindungsgemäßen Verfahrens überflüssig.

Im Folgenden wird die Erfindung näher erläutert.

In dem erfindungsgemäßen Verfahren kann es vorteilhaft sein, als Pressvakanz eine zylindrische Hülse aus Keramik, vorzugsweise aus hochfester Siliziumnitrid Keramik einzusetzen. Dabei können die Ober- und Unterstempel der hydraulischen Presse aus gehärtetem Stahl ausgewählt sein. Bevorzugt können Stempel in zylindrischer Form eingesetzt werden, doch ist auch jede andere Form möglich, zum Beispiel kantige Stempel, welche würfel- oder quaderförmige Presslinge ergeben, oder halbkugelige Formen. Da die feinteiligen Feststoffe Chlorverbindungen enthalten, weisen die Presslinge bei Kontakt mit Wasser bzw. Luftfeuchte auf ihrer Oberfläche Salzsäure auf, welche sowohl unzureichend legierten Stahl als auch unlackierte Bestandteile der hydraulischen Presse zersetzt. Deshalb ist der Einsatz einer keramischen Hülse aus Siliziumnitrid, Si₃N₄, als Pressvakanz vorteilhaft.

Chlorwasserstoff greift ebenfalls Schleimhäute, Haut und Augen des Menschen an. Deshalb ist streng darauf zu achten, dass im Falle einer manuellen Durchführung des Verfahrens persönliche Schutzausrüstung getragen wird, die den unmittelbaren Kontakt der eingesetzten feinteiligen Feststoffe und der erfindungsgemäß erhaltenen Presslinge mit Haut, Augen und Schleimhäuten unterbindet.

Vorzugsweise können anorganische Bindemittel, vorzugsweise Kieselsäuren, Aluminate, Zirkonate, Calciumoxid, Calciumhydroxid, Zement, Calziumsulfat, organische Verbindungen enthaltende Bindemittel, zum Beispiel Kieselsäureester, oder ein Gemisch dieser Bindemittel eingesetzt werden. Falls organische Bindemittel eingesetzt werden, muss der organische Anteil in einem Kalzinierungsschritt vor Einsatz bei der Chlorsilanherstellung entfernt werden.

Der Einsatz eines Bindemittels oder eines Gemisches oben genannter Bindemittel hat den Vorteil eines alkalischen pH Wertes. Denn die Feststoffe aus der Chlorsilansynthese enthalten aufgrund der vorherrschenden Reaktionsbedingungen im Chlorsilanherstellprozess HCl und hydrolysierbare Silizium-Halogen-Bindungen, die an den Feststoffen anhaften, welche somit einen sauren pH Wert aufweisen. Dieser wird durch das oder die Bindemittel neutralisiert. Die unangenehme Eigenschaft der Presslinge, Chlorwasserstoff freizusetzen, kann damit also mindestens teilweise aufgehoben werden.

Es kann vorteilhaft sein, in dem erfindungsgemäßen Verfahren einen Pressdruck aufzuwenden, der höchstens 14 kN/cm² beträgt, vorzugsweise von 10 kN/cm² bis 12 kN/cm² beträgt. Unter Druck und Pressdruck wird im Rahmen der Erfindung der Überdruck oberhalb des Umgebungsdruckes von 1013 hPa bei 20 °C verstanden, der auf die feinteiligen Feststoffe in der hydraulischen Presse ausgeübt wird. Bei einem Pressdruck von Null wird also gerade der Umgebungsdruck ausgeübt und damit keine Verdichtung erzielt.

Bei einem Pressdruck von höchstens 14 kN/cm² werden überraschend stabile Presslinge erhalten, denn diese lassen sich handhaben, beispielsweise über ein Transportband in einen Reaktor für die Herstellung von Chlorsilanen befördern, ohne zu zerbrechen oder sich in Brocken zu zerlegen.

Wählt man den Pressdruck aus dem Intervall von 10 kN/cm² bis 12 kN/cm², überstehen solche erfindungsgemäß erhaltenen Presslinge sogar einen Fall aus bis zu 2 m Höhe, ohne zu zerspringen. Das liegt daran, dass diese Presslinge keine inhomogene Dichteverteilung aufweisen, gleichbedeutend damit, dass die Presslinge keine Zonen mit erhöhtem Dichtegradienten, sogenannte Lagen, aufweisen. Die Lagen können quer, längs oder in jeder anderen Richtung innerhalb des Volumens des Presslings und bezogen auf die Wirkungsrichtung des Pressdruckes ausgedehnt sein und eine vliesen- oder linsenartige Gestalt haben. Die Bildung solcher Lagen, die sogenannte Lagenbildung, tritt besonders vermehrt oberhalb eines Pressdruckes von 14 kN/cm² auf. Wird die Lagenbildung vermieden, können die Presslinge besonders einfach in den Reaktor zurückgeführt werden.

In einer weiteren Ausprägung des erfindungsgemäßen Verfahrens kann der Pressdruck aufgewandt werden, indem der Druck beginnend bei Null mit einer ausgewählten Pressgeschwindigkeit angefahren wird. Die Pressgeschwindigkeit ist im Rahmen der Erfindung der Quotient aus Pressdruck und der Zeitdauer, während der der Druck monoton ansteigend bis zum Pressdruck erhöht wird, gleichbedeutend damit, dass der Pressdruck während dieser Zeitdauer angefahren wird.

Vorzugsweise kann in dem erfindungsgemäßen Verfahren der Pressdruck mit einer Pressgeschwindigkeit von 0,1 bis 1 kN/cm²s, bevorzugt von 0,5 kN/cm²s angefahren werden, bis der Pressdruck erreicht ist, und anschließend während einer Zeitdauer von 0,5 bis 1,5 s, bevorzugt von 1 s gehalten, und anschließend während einer Zeitdauer von 0,5 bis 1,5 s, bevorzugt von 1 s, auf Null abgebaut werden.

Besonders bevorzugt wird in dem erfindungsgemäßen Verfahren mindestens ein Entlüftungshub durchgeführt werden, wobei jeder Entlüftungshub dadurch gekennzeichnet ist, dass bei zumindest einem Anfangsdruck p1 i , der höchstens so groß ist wie der Pressdruck, dieser Druck während einer Zeitdauer Δ1 von 0,5 bis 1,5 s, bevorzugt von 1 s, auf einen Wert p1f abgebaut wird, vorzugsweise auf p1f = 0, und p1f während einer Zeitdauer 51 von 0 bis 1 s, vorzugsweise während 0 s gehalten wird, und anschließend der Druck angefahren wird, bis der Pressdruck erreicht ist.

Vorzugsweise wird der Anfangsdruck kleiner als der Pressdruck gewählt. Es wurde nämlich gefunden, dass beim Auffüllen einer Pressvakanz mit den feinteiligen Feststoffen vor dem Anfahren des Druckes die Pressvakanz bis zu 77 Vol.-% Luft oder Gas enthält. Beim Anfahren des Druckes werden die feinteiligen Feststoffe allmählich verdichtet, und die Luft bzw. das eingeschlossene Gas muss entweichen. Je geringer die Größen der Partikel der feinteiligen Feststoffe aber sind, desto länger dauert es, bis eingeschlossene Luft bzw. Gas entwichen ist. Wird in dem erfindungsgemäßen Verfahren zumindest ein Entlüftungshub durchgeführt, erhält man Presslinge mit größerer Festigkeit, als ohne zumindest einen Entlüftungshub.

Besonders feste Presslinge sind erhältlich, falls in dem erfindungsgemäßen Verfahren zwei Entlüftungshübe a und b durchgeführt werden, und a bei einem Anfangsdruck p1a, mit den Zeitdauern Δ1a und δ1a, b bei einem Anfangsdruck p1b, mit den Zeitdauern Δ1b und δ1b, und p1a und p1b gleich oder verschieden, vorzugsweise verschieden sind, und die Zeitdauern Δ1a und Δ1b gleich oder verschieden, vorzugsweise verschieden sind, und die Zeitdauern δ1a und δ1b gleich oder verschieden, vorzugsweise verschieden sind.

Jeder Entlüftungshub kann mit oder ohne Vakuum durchgeführt werden, vorzugsweise ohne Vakuum, und mit 0,2 bis 1 kN/cm², bevorzugt 0,5 kN/cm² Pressdruck, und während 2 bis 10 s, bevorzugt 5 s Dauer angefahren werden.

In dem erfindungsgemäßen Verfahren können, während, bevor, oder nachdem hydraulisch gepresst wird oder wurde, die feinteiligen Feststoffe auf eine Temperatur von -150 °C bis -5 °C gekühlt werden, wobei eine Vereisung oder Kondensation der Restfeuchte zwischen den Partikeln der feinteiligen Feststoffe eintritt, oder die feinteiligen Feststoffe auf eine Temperatur von 90 °C bis 1400 °C erhitzt werden, wobei eine Agglomerierung der feinen Partikel im Volumen der feinteiligen Feststoffe eintritt.

Es kann des Weiteren vorteilhaft sein, in dem erfindungsgemäßen Verfahren den Pressling aus der Pressvakanz mit einer Ausstoßkraft von 7 bis 8 kN/cm² auszustoßen. Die Ausstoßkraft muss aufgewendet werden, um den Pressling aus der Vakanz zu treiben. Sie ist dem Fachmann aus dem Gebiet der hydraulischen Pressen bekannt. Unüblich für das Ergebnis des hydraulischen Pressens, entstehen jedoch beim Ausstoßen keine Geräusche.

Es entsteht also kein ruckartiger Kraftverlauf beim Ausstoßen des Presslings aus der Vakanz, mit dem man im Stand der Technik aufgrund der wesentlich größeren Haftreibung verglichen mit der Gleitreibung rechnen würde. Der bekannte Slip-Stick Effekt bleibt bei der Durchführung des beanspruchten Verfahrens überraschend aus.

## Patentansprüche

1. Verfahren zur Aufbereitung feinteiliger Feststoffe bei der Herstellung von Chlorsilanen,
**dadurch gekennzeichnet,**
**dass** die feinteiligen Feststoffe zu Körpern erhöhter Dichte hydraulisch gepresst werden, wobei die feinteiligen Feststoffe durch Entzug von Wärmeenergie vereist oder durch Zufuhr von Wärmeenergie agglomeriert werden.

2. Verfahren nach Anspruch 1, wobei als Pressvakanz eine zylindrische Hülse aus Keramik, vorzugsweise aus hochfester Siliziumnitrid Keramik eingesetzt wird.

3. Verfahren nach einem der vorherigen Ansprüche, wobei ein Pressdruck aufgewandt wird, der höchstens 14 kN/cm² beträgt, vorzugsweise von 10 kN/cm² bis 12 kN/cm² beträgt.

4. Verfahren nach Anspruch 1, wobei,
während, bevor, oder nachdem hydraulisch gepresst wird oder wurde,
die feinteiligen Feststoffe auf eine Temperatur von -150 °C bis -5 °C gekühlt werden, wobei eine Vereisung oder Kondensation der Restfeuchte zwischen den Partikeln der feinteiligen Feststoffe eintritt, oder
die feinteiligen Feststoffe auf eine Temperatur von 90 °C bis 1400 °C erhitzt werden, wobei eine Agglomerierung der feinen Partikel im Volumen der feinteiligen Feststoffe eintritt.
